# EUROPEAN PATENT SPECIFICATION

(11) **EP 3 064 629 B1**
(45) Date of publication and mention of the grant of the patent: **13.06.2018**
(21) Application number: 13896334.3
(22) Date of filing: 20.12.2013
(51) Int. Cl.: D06F 25/00, D06F 58/20, D06F 17/06, D06F 58/02

(54) **PULSATOR-TYPE HEAT PUMP COMBINED WASHER-DRYER AND DRYING METHOD**
PULSATORARTIGE WÄRMEPUMPE IN KOMBINATION MIT WASCH-TROCKEN-MASCHINE UND TROCKNUNGSVERFAHREN
LAVE-LINGE/SÈCHE-LINGE COMBINÉ À POMPE À CHALEUR DU TYPE PULSATEUR, ET PROCÉDÉ DE SÉCHAGE

(30) Priority: 30.10.2013 CN 201310526358
(43) Date of publication of application: 07.09.2016
(73) Proprietor: Haier Group Corporation, Qingdao, Shandong 266101 (CN); Qingdao Haier Washing Machine Co., Ltd., Qingdao, Shandong 266101 (CN)
(72) Inventor: SONG, Huacheng, Qingdao Shandong 266101 (CN); XU, Sheng, Qingdao Shandong 266101 (CN); SHAN, Shiqiang, Qingdao Shandong 266101 (CN); TIAN, Shujun, Qingdao Shandong 266101 (CN)
(74) Representative: Ziebig, Marlene
(86) International application number: PCT/CN2013/090113
(87) International publication number: WO 2015/062148

(56) References cited:
- EP-A1- 2 360 309
- CN-A- 103 097 603
- CN-A- 103 201 424
- JP-A- 2004 065 428
- JP-A- 2004 065 428
- JP-A- 2004 089 413
- JP-A- 2008 104 478
- JP-A- 2011 115 428
- JP-B2- 4 973 028
- JP-B2- 4 973 028
- KR-A- 20080 091 660

## Description

### FIELD OF THE INVENTION

The present invention relates to a combined washer-dryer in the field of washing machines, and in particular, to a pulsator-type heat pump combined washer-dryer and a drying method.

### BACKGROUND OF THE INVENTION

Most existing pulsator combined washer-dryers adopt a form of heating pipe (strip), and include straight line-type pulsator combined washer-dryers and water-condensing type pulsator combined washer-dryers. Air between a housing and an outer drum in a straight line-type pulsator combined washer-dryer is heated by a heating pipe (strip) and then blows into an inner drum from a top cover under the drive of a fan. Moisture in the clothing in the inner drum exchanges heat with the hot dry air, and the moisture absorbs heat to become steam, which is then added to the air to form a moist air. The moist air goes up and flows away from a gap of the top cover, or goes down and blows out through a gap on the pulsator and a drain pipe at a bottom part of the outer drum.

For example, in a scrubbing-and-drying machine of Chinese patent with application no. CN00137763.9, the present invention provides an outer drum. The outer drum is elastically suspended in a housing, an inner drum for receiving clothing is rotatably supported in the outer drum, and a rotating pulsator is rotatably disposed inside the inner drum at a bottom part thereof. The inner drum and/or the pulsator is driven by an electric motor. A drying and blowing fan conveys air to the inner drum, and a heating device heats the air conveyed by the blowing apparatus. A controller controls operations of the electric motor, the drying and blowing fan, the heater, or the like, so as to control procedures of washing, rinsing, and de-watering. In the de-watering process, the controller drives the inner drum and at the same time drives the dying and blowing fan, so as to maintain conveying of air to the inner drum.

There is also a water-condensing type pulsator combined washer-dryer. Air is heated by a heating pipe (strip) and then blows into an inner drum from a top cover under the drive of a fan. Moisture in the clothing in the inner drum exchanges heat with the hot dry air, and the moisture absorbs heat to become steam, which is then added to the air. The moist air goes downwards and arrives at a water condenser at a rear part of the combined washer-dryer via a gap on the pulsator and a pipe below or at a bottom part of an outer drum. The moist air exchanges heat with the water condenser to separate moisture and become relatively dry air, and again is heated by the heating pipe (strip) for drying circulation under the drive of the fan.

In a combined washer-dryer of Chinese patent with application no. CN200410033567.5, in the present invention, an outer drum is elastically suspended inside a machine body, an inner drum/pulsator shaft is substantially in a vertical direction, an inner drum for receiving clothing is supported in the outer drum in a free rotating manner, and hot air heated by a heater is conveyed into the inner drum by a drying blower fan. A heat exchanger that is connected to a lower part of the outer drum removes moisture from the wet hot air. A circulating moisture removing passage is used to circulate the hot air, and apparatuses such as the heat exchanger, the drying blower fan, and the heater are provided in the passage.

JP 2004 065428 A discloses a washing machine, wherein a casing is provided, with: an outer tub rotatably fitting an inner tub therein, a heat absorber and a radiator consisting of a heat exchanger constituting the heat pump device and a blowing means for supplying heated air into the inner tub. The heat absorber and the radiator are disposed between the outer tub and the rear surface of the casing.

JP 4 973028 B2 provides a washing/drying machine with a radiator, a heat sink. A supporting base fixes the heat sink in such a manner that bubbles or washing water which have entered the heat-exchanging air flow passage equipped with the radiator and the heat sink of a heat pump device may be guided to a water storage chamber storing condensation water generated in the heat sink.

Further, JP 2011 115428 A shows a washing and drying machine. In a process of drying of the washing and drying machine, a temperature sensing part senses a refrigerant temperature in a compressor. A control part gradually decreases the number of the motor rotation of a second motor according to the increase of the refrigerant temperature sensed by the temperature sensing part.

JP 2004 089413 A moreover illustrates a clothes dryer, which is equipped with a heat pump device. An airflow channel which connects a radiator, a drying chamber and a heat absorber are provided, and circulate air for drying.

EP 2 360 309 A1 discloses a laundry machine including: a housing, a water vessel disposed in the housing, a detergent dispenser provided above the water vessel, a water supply channel, in fluid communication with the detergent dispenser and the water vessel, a water supply valve configured to control water supply and a formation member connected to the water supply valve to form a water filling pipe for supplying water on the detergent dispenser.

KR 2008 0091660 A finally shows a washing/drying machine comprising a condenser and a compressor and supplying low temperature dry air to a rotary tub..

In view of the above, the present invention is provided.

### SUMMARY OF THE INVENTION

An objective of the present invention is providing a pulsator-type heat pump combined washer-dryer, so as to achieve the purpose of drying clothing by using a heat pump system. To achieve the objective of the present invention, the following technical solutions are adopted in a first aspect of the invention:
A pulsator-type heat pump combined washer-dryer includes: a housing, an outer drum mounted in the housing, an inner drum mounted in the outer drum, an electric motor provided at a lower part of the inner drum and driving the inner drum and/or the pulsator to rotate, where an outer part of the outer drum is provided with a an air duct and a heat pump system, the air duct connects top and bottom ends of the sealed outer drum, and an evaporator and a condenser for the heat pump system are mounted in the air duct; and the heat pump system further includes: a throttle apparatus and a compressor, and the evaporator, the compressor, the condenser and the throttle apparatus that are sequentially connected form a circulating flow path that allows a medium to flow through, wherein the condenser and the evaporator are disposed in the air duct at a rear part of the outer drum and the air duct includes: a first vertical air duct, a second vertical air duct, and a third vertical air duct that are vertically disposed, at a rear part of the outer drum, and are sequentially connected one another in an end-to-end manner, a lower transverse air duct connected to a lower end of the first vertical air duct, and an upper transverse air duct connected to an upper end of the third vertical air duct; and the lower transverse air duct is in communication with the lower part of the outer drum, and the upper transverse air duct is in communication with an upper part of the outer drum, so as to enable the outer drum and the air duct to form a 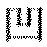 -shaped circulating air path, wherein a top of the first vertical air duct and a top of the third vertical air duct are both higher than an opening of the outer drum and wherein and wherein the evaporator and the condenser are arranged between said tops. The following features may be adopted as further advantageous design features. Further, two ends of the air duct respectively are a first end and a second end, the first end is connected to an upper part or a lower part of the outer drum, and the second end is connected to a lower part or an upper part of the outer drum, so as to enable the air duct and the outer drum to form a circulating air path; and a filter mesh, the evaporator, the condenser, and a fan are sequentially provided in the air duct from the first end to the second end.

Further, the condenser and the evaporator are disposed in the air duct at the upper part of the outer drum.

Further, a condensed water drain pipe that drains condensed water out of the combined washer-dryer is connected to a corresponding bottom part of the air duct in which the evaporator is provided.

Further, the air duct consists of a lower transverse air duct, a vertical air duct, and an upper transverse air duct; one end of the lower transverse air duct is connected to a bottom part of the outer drum and the other end of the lower transverse air duct extends backwards to be connected to a lower end of the vertical air duct; and an upper end of the vertical air duct is connected to one end of the upper transverse air duct and the other end of the upper transverse air duct) is connected to an upper end of the outer drum.

Further, the compressor is disposed outside the air duct, an outlet end of the compressor is connected to the condenser disposed in an interior of the air duct, and an inlet end of the compressor is connected to the evaporator disposed in the interior of the air duct; and one end of the throttle apparatus is connected to the condenser and the other end of the throttle apparatus is connected to the evaporator.

Further, an outer drum door for receiving clothing and ensuring sealing of the outer drum is disposed at an opening of the outer drum; and a drain pipe is connected to the bottom part of the outer drum, and a drain valve is disposed on the drain pipe.

Further, a filter mesh is disposed in the air duct between a first end of the air duct and the evaporator, and a condensed water drain pipe is connected to a connection section between the second vertical air duct and the third vertical air duct.

Further, when the first end of the air duct is an end at which the lower transverse air duct is connected to the lower part of the outer drum, the evaporator is disposed in the second vertical air duct and the condenser is disposed in the third vertical air duct.

Further, when the first end of the air duct is an end at which the upper transverse air duct is connected to the upper part of the outer drum, the condenser is disposed in the second vertical air duct and the evaporator is disposed in the third vertical air duct.

Further, the evaporator and the condenser are sequentially disposed in the second vertical air duct or the third vertical air duct along a flow direction of air.

Another objective of the present invention is providing a drying method for the pulsator-type heat pump combined washer-dryer according to the above described first aspect of the invention and advantageously combinable with any one of the above descriptions. Therefore, a second aspect of the invention is such a method including: introducing moist air from an outer drum to an air duct, condensing moisture in the moist air by an action of a heat pump system, to form condensed water and high-temperature dry air, circulating the high-temperature dry air back to the outer drum, and draining the condensed water out of a combined washer-dryer.

The following features may be adopted as further advantageous design features.

Further, a pulsator in an inner drum of the combined washer-dryer rotates, and drives clothing in the inner drum to turn up and down, to enable the clothing to fully contact the high-temperature dry air during drying, so as to improve a drying efficiency of clothing and dry the clothing more uniformly. Air that enters the air duct from the outer drum is first filtered by a filter mesh to remove lint, and then enters the heat pump system. Therefore, the clothing lint is prevented from entering the heat pump system along with the air flow and causing a damage to the heat pump system.

Further, during drying, an operating pressure of the heat pump system gradually increases, and a rotation speed of a compressor decreases after the operating pressure exceeds a set value. Preferably, if the operating pressure of the heat pump system is still above the set value when the rotation speed of the compressor of the heat pump system decreases to a minimum operating speed, a drain valve is opened, and air in the circulating air duct that is constructed by the air duct and the outer drum exchanges heat with outside air via a drain pipe, so as to reduce a temperature value of air in the circulating air duct, and reduce an operating load of the heat pump system.

Further, the operating pressure of the heat pump system is above a set value when one of the following conditions is met: a running current I of the compressor is greater than a limit value Imax, a condenser surface temperature t1 that reflects a condensing temperature is greater than a limit value tlmax, and a compressor exhaust temperature t2 that reflects an inner temperature of the compressor is greater than a limit value t2max.

During the whole drying process, input electric energy for driving the compressor is continuously transferred by a medium, and is conducted to a circulating air path for heating the air. Therefore, the heat loss in the whole circulating air path is the consumption of energy emitted to the ambient through a housing of the combined washer-dryer, thereby reducing power consumption of the whole system.

By using the foregoing technical solutions, the present invention has the following advantages as compared with the prior art: by using the apparatus, the heat emitted due to the drop in the temperature of the moist air in the air duct is transmitted to the condenser from the evaporator by an action of the medium, so as to heat the dry air. Therefore, the energy use efficiency is improved and the power consumption is reduced. More specifically, components such as the evaporator and the condenser for the heat pump system in the present invention are mounted at an upper side of the housing of the combined washer-dryer, so as to ensure that the water level during washing does not exceed the heat pump system during washing by using the combined washer-dryer, and improve safety of the heat pump system. Meanwhile, the present invention has a simple structure and a significant effect, and is suitable for extended use.

### BRIEF DESCRIPTION OF THE DRAWINGS

FIG. 1 is a structural schematic diagram of a combined washer-dryer that does not fall under the scope of the invention as claimed in claim 1;
FIG. 2 is a diagram illustrative of a mounting mode of a heat pump system in the combined washer-dryer that does not fall under the scope of the invention as claimed in claim 1;
FIG. 3 is a diagram illustrative of a mounting mode of a heat pump system in the combined washer-dryer that does not fall under the scope of the invention as claimed in claim 1;
FIG. 4 is a structural schematic diagram of a combined washer-dryer according to Embodiment 3 of the present invention;
FIG. 5 is a structural schematic diagram of a combined washer-dryer according to Embodiment 4 of the present invention;
FIG. 6 is a structural schematic diagram of a combined washer-dryer according to Embodiment 5 of the present invention; and
FIG. 7 is a structural schematic diagram of a combined washer-dryer according to Embodiment 6 of the present invention.

Description of main elements: 1-housing, 2-outer drum, 3-inner drum, 4-pulsator, 5-electric motor, 6-drain pipe, 7-fan, 8-compressor, 9-condenser, 10-evaporator, 11-filter mesh, 12-throttle apparatus, 13-housing door, 14-outer drum door, 15-drain valve, 16-condensed water drain pipe, 17-first vertical air duct, 18-second vertical air duct, 19-third vertical air duct, 20-lower transverse air duct, 21-vertical air duct, 22-upper transverse air duct.

### DETAILED DESCRIPTION OF THE INVENTION

The present invention is described in detail below in combination with the embodiments 4 to 7. Embodiments 1 to 3 do not fall under the scope of the invention as claimed in claim 1.

### Embodiment 1

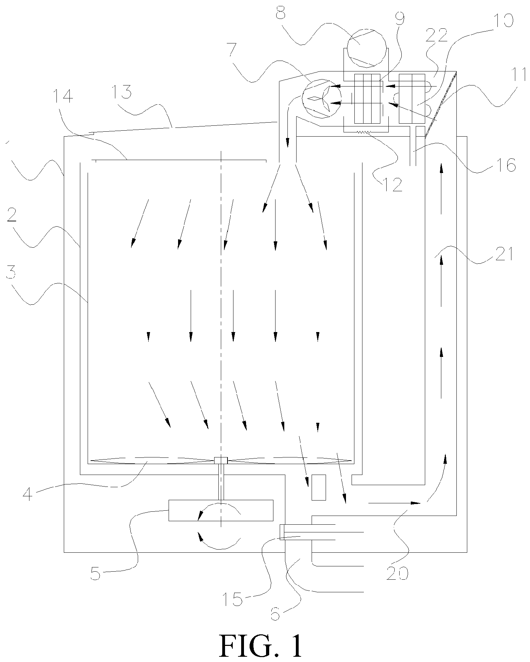

As shown in FIG. 1, this embodiment introduces a pulsator-type heat pump combined washer-dryer, including a housing 1, an outer drum 2 mounted in the housing 1, an inner drum 3 mounted in the outer drum 2 and having an axis that form an acute angle or overlaps with a vertical direction, a pulsator 4 provided at a bottom part of the inner drum 3, and an electric motor 5 provided at a lower part of the outer drum 2 and driving the inner drum 3 and/or the pulsator 4 to rotate. An opening is provided at an upper part of the housing 1. A housing door 13 capable of opening and closing is disposed at the opening, so as to enable clothing to be put into the inner drum 3 through the housing door 13. An outer drum door 14 capable of opening and closing is disposed at an opening of an upper part of the outer drum 2. A drain pipe 6 is disposed at a bottom part of the outer drum 2. A drain valve 15 is disposed on the drain pipe 6.

In this embodiment, an air duct is further mounted in the housing 1 of the combined washer-dryer. The air duct is disposed between the housing 1 and the outer drum 2. The air duct consists of a lower transverse air duct 20, a vertical air duct 21, and an upper transverse air duct 22 that are connected one another in an end-to-end manner, so that the air duct and the outer drum form a □-shaped circulating air path. The bottom part of the outer drum 2 of the combined washer-dryer is separately connected to the air duct and the drain pipe 6 through three-way connection. The other end of the drain pipe 6 extends outside the combined washer-dryer. The drain valve 15 is disposed on the drain pipe 6. Opening and closing of the outer drum door 14 and the drain valve 15 may ensure sealing of the circulating air path constructed by the outer drum 2 and the air duct.

In this embodiment, the outer drum 2 is disposed at a front side close to the housing 1. The specific structure of the □-shaped circulating air path constructed by the outer drum 2 and the air duct is as follows: the bottom part of the outer drum 2 is connected to one end of the lower transverse air duct 20, and the other end of the lower transverse air duct 20 extends along a horizontal direction to a rear part of the housing 1; the other end of the lower transverse air duct 20 is connected to a lower end of the vertical air duct 21 that is vertically disposed at a rear part of the outer drum; and an upper end of the vertical air duct 21 is connected to one end of the upper transverse air duct 22 that is horizontally disposed on an upper part of the outer drum 2, and the other end of the upper transverse air duct 22 is connected to the upper part of the outer drum 2. In this embodiment, to facilitate description, one end of the lower transverse air duct 20 that is connected to the lower part of the outer drum 2 is set as a first end of the air duct, and one end of the upper transverse air duct 22 that is connected to the upper part of the outer drum 2 is set as a second end of the air duct.

In this embodiment, a heat pump system is mounted between the upper part of the outer drum 2 and the housing 1. The heat pump system includes: an evaporator 10, a compressor 8, a condenser 9, and a throttle apparatus 12 that are sequentially communicated, so as to construct a circulating path for circulating flowing of a medium. The condenser 9 and the evaporator 10 are disposed in the upper transverse air duct 22. The compressor 8 is disposed outside the air duct. One end of the throttle apparatus 12 is connected to the evaporator 10, and the other end of the throttle apparatus 12 is connected to the condenser 9. An outlet end of the compressor 8 is connected to the condenser 9 and an inlet end of the compressor 8 is connected o the evaporator 10. A filter mesh 11 is provided at a connection corner between the upper transverse air duct 22 and the vertical air duct 21. The filter mesh 11 is arranged to cover a cross-section of the air duct, and is capable of filtering out lint that passes through. Therefore, the filter mesh 11, the evaporator 10, the condenser 9, and the fan 7 are sequentially arranged in a direction from the first end to the second end along the air duct. Therefore, by an action of the fan 7, the air in the circulating air path that is constructed by the outer drum 2 and the air duct enters the first end of the air duct from the bottom part of the outer drum 2, flows through the filter mesh 11, the evaporator 10, the condenser 9, and the fan 7 in the air duct, and then circulates back to the upper part of the outer drum 2 from the second end of the air duct, so as to form air circulation.

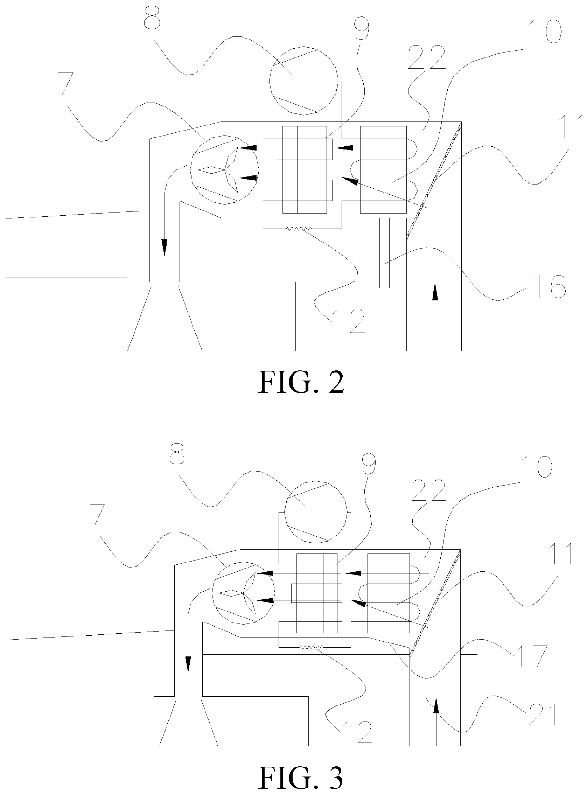

As shown in FIG. 2, in this embodiment, a water collection box is disposed at the bottom of the air duct at a position corresponding to the position in the air duct where the evaporator 10 is disposed. The water collection box is connected to an outer part of the combined washer-dryer via the condensed water drain pipe 16. Therefore, the condensed water separated out from the moist hot air at the evaporator is collected by the water collection box, and is then drained out of the combined washer-dryer through the condensed water drain pipe 16.

By mounting the heat pump system in the air duct formed at the upper part of the outer drum and making it impossible for washing water to flood the heat pump system when a highest water level of the combined washer-dryer is reached, damage to the heat pump system caused by an excessively high water level of the combined washer-dryer is avoided.

In this embodiment, alternatively, one of the upper transverse air duct that is connected to the upper part of the outer drum is set as a first end of the air duct, and one end of the lower transverse air duct that is connected to the lower part of the outer drum is set as a second end of the air duct. A filter mesh, an evaporator, a condenser, and a fan are sequentially arranged in a direction from the first end to the second end long the air duct (not shown in the figure), so as to enable the air to enter the first end of the air duct from the upper part of the outer drum, flow through the filter mesh, the evaporator, the condenser, and the fan, and then circulate back to the bottom of the outer drum, by an action of the fan, so as to form an air path.

### Embodiment 2

In this embodiment, the air duct includes a lower transverse air duct in communication with the bottom part of the outer drum 2 and located at the lower part of the outer drum 2, an upper transverse air duct in communication with the top of the outer drum 2 and located at the upper part of the outer drum 2, and a vertical air duct located at a rear part of the outer drum 2 and having upper and lower ends that are separately in communication with the upper transverse air duct and the lower transverse air duct.

As shown in FIG. 3, a filter mesh 11 that covers a cross-section of the air duct is mounted at a connection corner between the upper transverse air duct 22 and the vertical air duct 21. The evaporator 10 of the heat pump system is disposed at a top of the upper transverse air duct 22 close to the corner. An inclined surface 17 is provided at the bottom part of the air duct. The inclined surface 17 is a slope extending downwards to the corner. Therefore, the condensed water separated from the moist air that passes through the evaporator flows to the corner along the inclined surface 17 at the bottom part of the air duct, then flows through the vertical air duct 21 and the lower transverse air duct 20 to the drain valve 15, and finally is drained out of the combined washer-dryer through the drain pipe 6.

### Embodiment 3

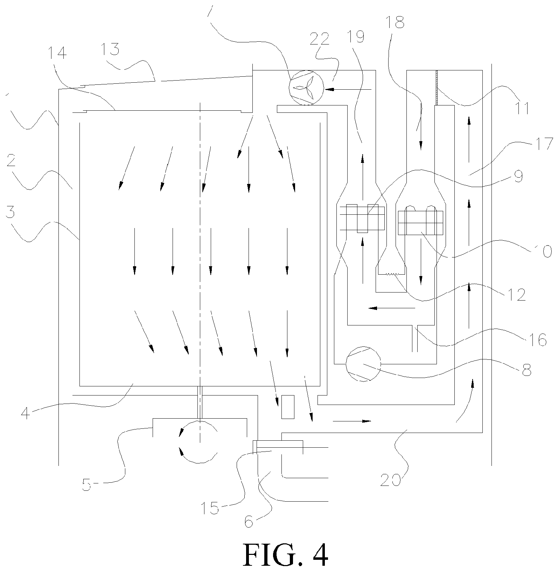

As shown in FIG. 4, in this embodiment, the air duct consists of a first vertical air duct 17, a second vertical air duct 18, and a third vertical air duct 19 that are vertically disposed, at a rear part of the outer drum 2, and are sequentially connected one another in an end-to-end manner, an upper transverse air duct at an upper part of the outer drum, and a lower transverse air duct at a lower part of the outer drum, so as to enable the outer drum 2 and the air duct to form a 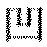 -shaped circulating air path. The specific structure of the 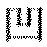 -shaped circulating air path is as follows: the outer drum 2 is disposed at a front side close to the housing 1, and the third vertical air duct 19, the second vertical air duct 18, and the first vertical air duct 17 are sequentially disposed between the rear part of the outer drum 2 and the rear side of the housing; and the bottom part of the outer drum 2 is connected to one end of the lower transverse air duct, and the other end of the lower transverse air duct extends backwards to the rear part of the outer drum to be connected to the lower end of the first vertical air duct; the upper end of the first vertical air duct 17 is connected to the upper end of the second vertical air duct 18, the lower end of the second vertical air duct 18 is connected to the lower end of the third vertical air duct 19, and the upper end of the third vertical air duct 19 is connected to the upper end of the outer drum 2 through the upper transverse air duct disposed at the upper part of the outer drum. In this embodiment, to facilitate description, one end of the lower transverse air duct 20 that is connected to the lower part of the outer drum 2 is set as a first end of the air duct, and one end of the upper transverse air duct 22 that is connected to the upper part of the outer drum 2 is set as a second end of the air duct.

In this embodiment, a heat pump system is mounted between the rear part of the outer drum 2 and the housing 1. The heat pump system includes: an evaporator 10, a compressor 8, a condenser 9, and a throttle apparatus 12 that are sequentially communicated, so as to construct a circulating path for circulating flowing of a medium. The evaporator 10 is disposed in the second vertical air duct 18, and the condenser 9 is disposed in the third vertical air duct 19. The throttle apparatus 12 is disposed between the first vertical air duct 17 and the second vertical air duct 18, and the compressor 8 is disposed outside the air duct. One end of the throttle apparatus 12 is connected to the evaporator 10, and the other end of the throttle apparatus 12 is connected to the condenser 9. An inlet end of the compressor 8 is connected to the evaporator 10, and an outlet end of the compressor 8 is connected to the condenser 9. In this embodiment, preferably, the compressor 8 is disposed at a position below a connection section between the second vertical air duct 18 and the third vertical air duct 19, above the lower transverse air duct 20, and between the first vertical air duct 17 and the outer drum 2.

In this embodiment, a filter mesh 11 is disposed at the connection section between the first vertical air duct 17 and the second vertical air duct 18. The filter mesh 11 is constructed by a mesh structure having relatively dense sprang and covering a cross-section of the air duct, so as to filter out impurities such as lint contained in the air that flows through the filter mesh 11. The lint is prevented from blowing into the heat pump system and causing damage thereto. A fan 7 is provided in the upper transverse air duct 22. The fan 7 provides a kinetic energy and drives air to move so as to form an air flow. Therefore, by an action of the fan 7, air in the circulating air path that is constructed by the outer drum 2 and the air duct enters the first end of the air duct from the bottom part of the outer drum 2, flows through the filter mesh 11, the evaporator 10, the condenser 9, and the fan 7 in the air duct, and then circulates back to the upper part of the outer drum 2 from the second end of the air duct, so as to form air circulation.

In this embodiment, a top of the first vertical air duct 17 is higher than an opening of the outer drum 2. By providing the first vertical air duct between the first end of the air duct and the evaporator and higher than the opening of the outer drum, washing water may not flood the top of the first vertical air duct when a highest water level of the combined washer-dryer is reached, it is ensured that the washing water does not contact the heat pump system, and damage to the heat pump system due to contact with washing water is avoided.

### Embodiment 4

In this embodiment, the air duct consists of a first vertical air duct 17, a second vertical air duct 18, and a third vertical air duct 19 that are vertically disposed, at a rear part of the outer drum 2, and are sequentially connected one another in an end-to-end manner, an upper transverse air duct at an upper part of the outer drum, and a lower transverse air duct at a lower part of the outer drum, so as to enable the outer drum 2 and the air duct to form a 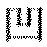 -shaped circulating air path. In this embodiment, to facilitate description, one end of the lower transverse air duct 20 that is connected to the lower part of the outer drum 2 is set as a second end of the air duct, and one end of the upper transverse air duct 22 that is connected to the upper part of the outer drum 2 is set as a first end of the air duct.

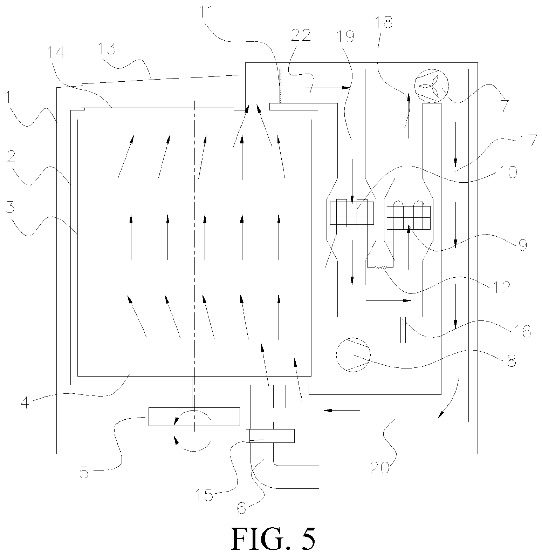

As shown in FIG. 5, a heat pump system is mounted between the rear part of the outer drum 2 and the housing 1. The heat pump system includes: a condenser 9, a throttle apparatus 12, an evaporator 10, and a compressor 8 that are sequentially communicated, so as to construct a circulating path for circulating flowing of a medium. Specific mounting positions are as follows: a filter mesh 11 is disposed in the upper transverse air duct, a condensed water drain pipe 16 is connected to a connection section between the second vertical air duct 18 and the third vertical air duct 19, the evaporator 10 and the condenser 9 are disposed in the third vertical air duct 19, and a fan 7 is disposed at a connection section between the first vertical air duct 17 and the second vertical air duct 18.

In this embodiment, the fan provides a kinetic energy and drives the air in the air circulating path that is constructed by the outer drum 2 and the air duct to enter the first end of the air duct from the upper part of the outer drum 2, flow through the filter mesh 11, the evaporator 10, the condenser 9, and the fan 7 in the air duct by an action of the fan 7, and then circulate back to the bottom part of the outer drum 2 from the second end of the air duct, by an action of the fan, so as to form air circulation.

### Embodiment 5

In this embodiment, the air duct consists of a first vertical air duct 17, a second vertical air duct 18, and a third vertical air duct 19 that are vertically disposed, at a rear part of the outer drum 2, and are sequentially connected one another in an end-to-end manner, an upper transverse air duct at an upper part of the outer drum, and a lower transverse air duct at a lower part of the outer drum, so as to enable the outer drum 2 and the air duct to form a 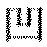 -shaped circulating air path. In this embodiment, to facilitate description, one end of the lower transverse air duct 20 that is connected to the lower part of the outer drum 2 is set as a first end of the air duct, and one end of the upper transverse air duct 22 that is connected to the upper part of the outer drum 2 is set as a second end of the air duct.

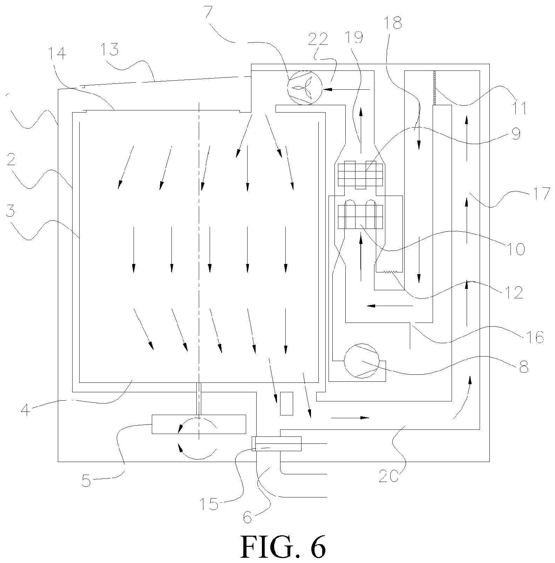

As shown in FIG. 6, in this embodiment, specific mounting positions of respective components in the air duct are as follows: a fan 7 is disposed in the upper transverse air duct 22, a condensed water drain pipe 16 is connected to a connection section between the second vertical air duct 18 and the third vertical air duct 19, an evaporator 10 and a condenser 9 are sequentially disposed in the third vertical air duct 19 from top to bottom, and a filter mesh 11 is provided at a connection section between the first vertical air duct 17 and the second vertical air duct 18.

In this embodiment, the fan provides a kinetic energy and drives the air in the air circulating path that is constructed by the outer drum 2 and the air duct to enter the first end of the air duct from the lower part of the outer drum 2, flow through the filter mesh 11, the evaporator 10, the condenser 9, and the fan 7 in the air duct by an action of the fan 7, and then circulate back to the upper part of the outer drum 2 from the second end of the air duct, by an action of the fan, so as to form air circulation.

### Embodiment 6

In this embodiment, the air duct consists of a first vertical air duct 17, a second vertical air duct 18, and a third vertical air duct 19 that are vertically disposed, at a rear part of the outer drum 2, and are sequentially connected one another in an end-to-end manner, an upper transverse air duct at an upper part of the outer drum, and a lower transverse air duct at a lower part of the outer drum, so as to enable the outer drum 2 and the air duct to form a -shaped circulating air path. In this embodiment, to facilitate description, one end of the lower transverse air duct 20 that is connected to the lower part of the outer drum 2 is set as a second end of the air duct, and one end of the upper transverse air duct 22 that is connected to the upper part of the outer drum 2 is set as a first end of the air duct.

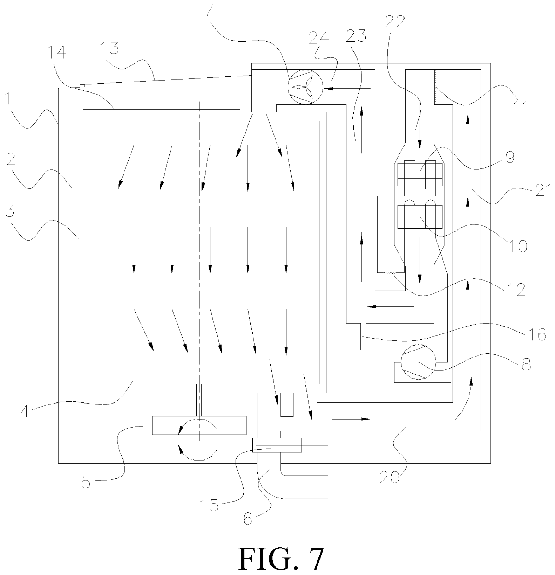

As shown in FIG. 7, a heat pump system is mounted between the rear part of the outer drum 2 and the housing 1. The heat pump system includes: a condenser 9, a throttle apparatus 12, an evaporator 10, and a compressor 8 that are sequentially communicated, so as to construct a circulating path for circulating flowing of a medium. Specific mounting positions are as follows: a filter mesh 11 is disposed in the upper transverse air duct, a condensed water drain pipe 16 is connected to a connection section between the second vertical air duct 18 and the third vertical air duct 19, the evaporator 10 and the condenser 9 are disposed in the third vertical air duct 19, and a fan 7 is disposed at a connection section between the first vertical air duct 17 and the second vertical air duct 18.

In this embodiment, the fan provides a kinetic energy and drives the air in the air circulating path that is constructed by the outer drum 2 and the air duct to enter the first end of the air duct from the upper part of the outer drum 2, flow through the filter mesh 11, the evaporator 10, the condenser 9, and the fan 7 in the air duct by an action of the fan 7, and then circulate back to the bottom part of the outer drum 2 from the second end of the air duct, by an action of the fan, so as to form air circulation.

### Embodiment 7

This embodiment introduces a drying method for the pulsator-type heat pump combined washer-dryer. The method includes: introducing moist air from an inner drum 3 into an air duct, condensing moisture in the moist air into condensed water by an action of a heat pump system, to form dry air, circulating the high-temperature dry air back to the inner drum 3, and draining the condensed water out of a combined washer-dryer.

In this embodiment, the drying method includes the following steps: 11) air in an air duct passes through a heat pump system to form high-temperature dry air, which blows into an outer drum 2 by an action of a fan 7; 12) moisture in clothing in an inner drum 3 exchanges heat with the hot dry air, the moisture absorbs heat to become steam and form a moist and hot air, and the moist and hot air flows into the air duct; 13) the moist and hot air contacts an evaporator 10 of the heat pump system, heat is transmitted to a medium in the evaporator 10, a temperature of the moist and hot air decreases to separate condensed water, and the condensed water is drained out of the combined washer-dryer; and 14) meanwhile, the moist and hot air becomes dry air having a relatively low temperature, the dry air passes through the condenser 9 of the heat pump system, the medium in the condenser 9 releases the heat to increase the temperature of the dry air, which then becomes high-temperature dry air, and then the high-temperature dry air circulate back to the outer drum 2 by an action of the fan 7.

In this embodiment, operating steps of the heat pump system are as follows: 21) the medium in the heat pump system absorbs heat from the air at the evaporator 10, to form a low-pressure overheated steam, which is then compressed by the compressor by an action of the compressor 8, the pressure of the steam increases, and the steam becomes a high-pressure steam; and 22) the high-pressure steam dissipates heat and condenses at the condenser 9, and is liquefied to release heat, thereby implementing reutilization of the heat. In this embodiment, a pulsator 4 in the inner drum 3 of the combined washer-dryer rotates, and drives clothing in the inner drum 3 to turn up and down, to enable the clothing to fully contact the high-temperature dry air in the inner drum 3 during drying, so as to improve a drying efficiency of clothing and dry the clothing more uniformly. In this embodiment, air that enters the air duct from the inner drum 3 is first filtered by the filter mesh 11 to remove lint, and then enters the heat pump system. Therefore, impurities such as lint are prevented from entering the evaporator 10 or the condenser 9 of the heat pump system and causing a damage to equipment.

In this embodiment, during the whole drying process, the temperature of the air in the circulating path of the air duct increases along with the increase in the operating time of the heat pump system, and the heat contained in the medium in the heat pump system continuously increases, which leads to an increase in the temperature of the medium in the condenser 9 and the evaporator 10, thereby causing an increase in the system pressure value of the heat pump system. To guarantee that the heat pump system is operated safely at a stable operating pressure during drying, a frequency-conversion control apparatus is needed to reduce a running speed of the compressor 8 or another heat-dissipation protection mechanism or the like is needed to regulate the operating pressure of the heat pump system, so as to ensure stable and safe operating of the system.

In this embodiment, if a surface temperature t1 of the condenser 9 is greater than a set value 1' and/or a compressor exhaust temperature t2 at an outlet of the compressor 8 is greater than a set value 2' and/or an operating current I of the compressor 8 is greater than a set value I', the operating speed of the compressor 8 decreases to a set value.

When the combined washer-dryer starts to dry, the compressor is operated at an initial rotation speed n1. When the surface temperature t1 of the condenser 9 increases to t11', the rotation speed of the compressor decreases from the initial rotation speed n1 to n2; when the surface temperature t1 of the condenser 9 increases to t12', the rotation speed of the compressor decreases from n2 to n3; when surface temperature t1 of the condenser 9 increases to t13', the rotation speed of the compressor decreases from n3 to n4...until the rotation speed of the compressor decreases to a minimum rotation speed n0, the compressor is operated at the rotation speed of n0 till the end of the drying. A relation among the rotation speeds of the compressor is as follows: 1) n2 > n3 > n4... > n0. A relation among the set values of the surface temperature of the condenser is as follows: t11' < t12 < t13·< ...

At a final stage of drying, when the compressor is operated at the rotation speed of nO, along with the increase in the temperature inside the drum, a running current I of the compressor 8 may also exceed a limit value Imax, a condenser surface temperature t1 that reflects the condensing temperature may exceed a limit value tlmax, and a compressor exhaust temperature t2 that reflects an inner temperature of the compressor may exceed a limit value t2max. At this time, the compressor 8 stops operating for a period of time T, so that the condenser surface temperature t1 that reflects the condensing temperature and the compressor exhaust temperature t2 that reflects an inner temperature of the compressor decrease to normal operating ranges. Preferably, the period of time T for which the compressor stops operating is greater than or equal to 3 minutes.

In this embodiment, at a final stage of drying, if the compressor is operated at the rotation speed of n0 and a running current I of the compressor 8 is greater than the limit value Imax or the condenser surface temperature t1 that reflects the condensing temperature is greater than the limit value tlmax or the compressor exhaust temperature t2 that reflects the inner temperature of the compressor is greater than the limit value t2max, a drain valve 15 may also be opened, and the air in the outer drum 2 and the air duct is exchanged with outside air through the drain pipe 6, to reduce a temperature value of air in the circulating air path, to further reduce the temperature of the medium in the compressor 8 and reduce the operating pressure of the compressor 8, so as to enable the running current I of the compressor, the condenser surface temperature t1 that reflects the condensing temperature, and the compressor exhaust temperature t2 that reflects the inner temperature of the compressor to decrease to normal operating ranges. Preferably, if the compressor still fails in recovering to a normal operating state after the drain valve is opened for a period of time T1, the compressor 8 stops operating for a period of time T. Further preferably, T1 is greater than or equal to 3 minutes.

During the whole drying process, input electric energy for driving the compressor 8 is continuously transferred by a medium, and is conducted to a circulating air path for heating the air. Therefore, the heat loss in the whole circulating air path is only the consumption of energy emitted to the ambient through a housing of the combined washer-dryer, thereby reducing power consumption of the whole system and improving the drying efficiency.

The implementation solutions in the embodiments can be further combined or replaced and the embodiments are only intended to illustrate the principles of the present invention and are not intended to limit the concept and the scope of the present invention. Certain changes and modifications can be made as would be known to one skilled in the art without departing from the design concept of the present invention, which are all fall within the scope of protection of the present invention.

## Claims

1. A pulsator-type heat pump combined washer-dryer, comprising: a housing, an outer drum (2) mounted in the housing (1), an inner drum (3) mounted in the outer drum (2), a pulsator (4) provided at a bottom part of the inner drum (3), and an electric motor (5) provided at a lower part of the outer drum (2) and driving the inner drum (3) and/or the pulsator (4) to rotate, wherein an outer part of the outer drum (2) is provided with an air duct and a heat pump system, the air duct connects top and bottom ends of the sealed outer drum (2), and an evaporator (10) and a condenser (9) for the heat pump system are mounted in the air duct; and the heat pump system further comprises: a throttle apparatus (12) and a compressor (8), and the evaporator (10), the compressor (8), the condenser (9) and the throttle apparatus (12) that are sequentially connected to form a circulating flow path that allows a medium to flow through, wherein
the condenser (9) and the evaporator (10) are disposed in the air duct at a rear part of the outer drum (2), and
the air duct comprises: a first vertical air duct (17), a second vertical air duct (18), and a third vertical air duct (19) that are vertically disposed, at a rear part of the outer drum (2), and are sequentially connected one another in an end-to-end manner, and
a lower transverse air duct (20) connected to a lower end of the first vertical air duct (17), and an upper transverse air duct (22) connected to an upper end of the third vertical air duct (19); and the lower transverse air duct (20) is in communication with the lower part of the outer drum (2), and the upper transverse air duct (22) is in communication with an upper part of the outer drum (2), so as to enable the outer drum (2) and the air duct to form a 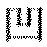 -shaped circulating air path,
charachterized in that,
a top of the first vertical air duct (17) and a top of the third vertical air duct (19) are both higher than an opening of the outer drum (2) and wherein the evaporator (10) and the condenser (9) are arranged between said tops.

2. The pulsator-type heat pump combined washer-dryer according to claim 1, wherein a filter mesh (11) is disposed in the air duct between a first end of the air duct and the evaporator (10), and a condensed water drain pipe (16) is connected to a connection section between the second vertical air duct (18) and the third vertical air duct (19).

3. The pulsator-type heat pump combined washer-dryer according to claim 2, wherein: when the first end of the air duct is an end at which the lower transverse air duct (20) is connected to the lower part of the outer drum (2), the evaporator (10) is disposed in the second vertical air duct (18) and the condenser (9) is disposed in the third vertical air duct (19).

4. The pulsator-type heat pump combined washer-dryer according to claim 2, wherein: when the first end of the air duct is an end at which the upper transverse air duct (22) is connected to the upper part of the outer drum (2), the condenser (9) is disposed in the second vertical air duct (18) and the evaporator (10) is disposed in the third vertical air duct (19).

5. The pulsator-type heat pump combined washer-dryer according to claim 2, wherein the evaporator (10) and the condenser (9) are sequentially disposed in the second vertical air duct (18) or the third vertical air duct (19) along a flow direction of air.

6. A drying method for the pulsator-type heat pump combined washer-dryer according to any one of claims 1 to 5, comprising: introducing moist air from an outer drum (2) to an air duct, condensing moisture in the moist air by an action of a heat pump system, to form condensed water and high-temperature dry air, circulating the high-temperature dry air back to the outer drum (2), and draining the condensed water out of a combined washer-dryer.

7. The drying method according to claim 6, wherein a pulsator in an inner drum of the combined washer-dryer rotates, and drives clothing in the inner drum to turn up and down, to enable the clothing to fully contact the high-temperature dry air during drying.

8. The drying method according to claim 6, wherein during drying, an operating pressure of the heat pump system gradually increases, and a rotation speed of a compressor decreases after the operating pressure exceeds a set value.

9. The drying method according to claim 8, wherein if the operating pressure of the heat pump system is still above the set value when the rotation speed of the compressor of the heat pump system decreases to a minimum operating speed, a drain valve (15) is opened, and air in the circulating air duct that is constructed by the air duct and the outer drum (2) exchanges heat with outside air via a drain pipe (6), so as to reduce a temperature value of air in the circulating air duct, and reduce an operating load of the heat pump system.

## Patentansprüche

1. Pulsatorartige kombinierte Wärmepumpen-Wasch-Trocken-Maschine, umfassend: ein Gehäuse, eine im Gehäuse (1) montierte äußere Trommel (2), eine in der äußeren Trommel (2) montierte innere Trommel (3), einen an einem Bodenteil der inneren Trommel (3) bereitgestellten Pulsator (4) und einen an einem unteren Teil der äußeren Trommel (2) bereitgestellten Elektromotor (5), der die innere Trommel (3) und/oder den Pulsator (4) zum Rotieren antreibt, wobei ein äußerer Teil der äußeren Trommel (2) mit einem Luftkanal und einem Wärmepumpensystem bereitgestellt ist, wobei der Luftkanal obere und untere Enden der abgedichteten äußeren Trommel (2) verbindet und wobei ein Verdampfer (10) und ein Kondensator (9) für das Wärmepumpensystem im Luftkanal montiert sind; und wobei das Wärmepumpensystem ferner Folgendes umfasst: eine Drosseleinrichtung (12) und einen Kompressor (8), und wobei der Verdampfer (10), der Kompressor (8), der Kondensator (9) und die Drosseleinrichtung (12) sequenziell verbunden sind, um einen umlaufenden Strömungsweg auszubilden, der es ermöglicht, dass ein Medium hindurchströmt, wobei der Kondensator (9) und der Verdampfer (10) im Luftkanal an einem hinteren Teil der äußeren Trommel (2) angeordnet sind, und
der Luftkanal Folgendes umfasst: einen ersten vertikalen Luftkanal (17), einen zweiten vertikalen Luftkanal (18) und einen dritten vertikalen Luftkanal (19), die vertikal an einem hinteren Teil der äußeren Trommel (2) angeordnet und in einer Ende-an-Ende-Weise sequenziell miteinander verbunden sind, und
einen unteren transversalen Luftkanal (20), der mit einem unteren Ende des ersten vertikalen Luftkanals (17) verbunden ist, und einen oberen transversalen Luftkanal (22), der mit einem oberen Ende des dritten vertikalen Luftkanals (19) verbunden ist; wobei der untere transversale Luftkanal (20) mit dem unteren Teil der äußeren Trommel (2) in Kommunikation steht und der obere transversale Luftkanal (22) mit einem oberen Teil der äußeren Trommel (2) in Kommunikation steht, um zu ermöglichen, dass die äußere Trommel (2) und der Luftkanal einen 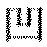 -förmigen umlaufenden Luftweg ausbilden, **dadurch gekennzeichnet, dass**
eine Oberseite des ersten vertikalen Luftkanals (17) und eine Oberseite des dritten vertikalen Luftkanals (19) beide höher als eine Öffnung der äußeren Trommel (2) sind, und wobei der Verdampfer (10) und der Kondensator (9) zwischen diesen Oberseiten angeordnet sind.

2. Pulsatorartige kombinierte Wärmepumpen-Wasch-Trocken-Maschine nach Anspruch 1, wobei im Luftkanal zwischen einem ersten Ende des Luftkanals und dem Verdampfer (10) ein Filtergewebe (11) angeordnet ist und ein Kondenswasserableitungsrohr (16) mit einem Verbindungsabschnitt zwischen dem zweiten vertikalen Luftkanal (18) und dem dritten vertikalen Luftkanal (19) verbunden ist.

3. Pulsatorartige kombinierte Wärmepumpen-Wasch-Trocken-Maschine nach Anspruch 2, wobei: wenn das erste Ende des Luftkanals ein Ende ist, an dem der untere transversale Luftkanal (20) mit dem unteren Teil der äußeren Trommel (2) verbunden ist, der Verdampfer (10) im zweiten vertikalen Luftkanal (18) angeordnet ist und der Kondensator (9) im dritten vertikalen Luftkanal (19) angeordnet ist.

4. Pulsatorartige kombinierte Wärmepumpen-Wasch-Trocken-Maschine nach Anspruch 2, wobei: wenn das erste Ende des Luftkanals ein Ende ist, an dem der obere transversale Luftkanal (22) mit dem oberen Teil der äußeren Trommel (2) verbunden ist, der Kondensator (9) im zweiten vertikalen Luftkanal (18) angeordnet ist und der Verdampfer (10) im dritten vertikalen Luftkanal (19) angeordnet ist.

5. Pulsatorartige kombinierte Wärmepumpen-Wasch-Trocken-Maschine nach Anspruch 2, wobei der Verdampfer (10) und der Kondensator (9) sequenziell im zweiten vertikalen Luftkanal (18) oder im dritten vertikalen Luftkanal (19) entlang einer Luftströmungsrichtung angeordnet sind.

6. Trocknungsverfahren für die pulsatorartige kombinierte Wärmepumpen-Wasch-Trocken-Maschine nach einem der Ansprüche 1 bis 5, umfassend: Einleiten von feuchter Luft aus einer äußeren Trommel (2) zu einem Luftkanal, Kondensieren von Feuchtigkeit in der feuchten Luft durch eine Wirkung eines Wärmepumpensystems, um Kondenswasser und hochtemperierte trockene Luft auszubilden, In-Umlauf-Bringen der hochtemperierten trockenen Luft zurück zur äußeren Trommel (2) und Ableiten des Kondenswassers aus einer kombinierten Wasch-Trocken-Maschine.

7. Trocknungsverfahren nach Anspruch 6, wobei ein Pulsator in einer inneren Trommel der kombinierten Wasch-Trocken-Maschine rotiert und Kleidung in der inneren Trommel dazu antreibt, sich nach oben und nach unten zu bewegen, um zu ermöglichen, dass die Kleidung während des Trocknens vollständig mit der hochtemperierten trockenen Luft in Kontakt kommt.

8. Trocknungsverfahren nach Anspruch 6, wobei während des Trocknens ein Betriebsdruck des Wärmepumpensystems graduell zunimmt und eine Rotationsgeschwindigkeit eines Kompressors abnimmt, nachdem der Betriebsdruck einen eingestellten Wert überschreitet.

9. Trocknungsverfahren nach Anspruch 8, wobei, sofern der Betriebsdruck des Wärmepumpensystems noch über dem eingestellten Wert ist, wenn die Rotationsgeschwindigkeit des Kompressors des Wärmepumpensystems auf eine Mindestbetriebsgeschwindigkeit abnimmt, ein Ableitungsventil (15) geöffnet wird und Luft im umlaufenden Luftkanal, der durch den Luftkanal und die äußere Trommel (2) ausgebildet ist, über ein Ableitungsrohr (6) Wärme mit Außenluft austauscht, um einen Lufttemperaturwert im umlaufenden Luftkanal zu reduzieren und eine Betriebslast des Wärmepumpensystems zu reduzieren.

## Revendications

1. Lave-linge/sèche-linge combiné à pompe à chaleur du type pulsateur, comprenant : un boîtier, un tambour extérieur (2) monté dans le boîtier (1), un tambour intérieur (3) monté dans le tambour extérieur (2), un pulsateur (4) fourni sur une partie de fond du tambour intérieur (3), et un moteur électrique (5) fourni sur une partie inférieure du tambour extérieur (2) et faisant pivoter par entraînement le tambour intérieur (3) et/ou le pulsateur (4), une partie extérieure du tambour extérieur (2) étant munie d'un conduit d'air et un système de pompe à chaleur, le conduit d'air raccordant les extrémités supérieure et inférieure du tambour extérieur scellé (2), et un évaporateur (10) et un condenseur (9) pour le système de pompe à chaleur étant montés sur le conduit d'air ; et le système de pompe à chaleur comprenant en outre : un dispositif d'étranglement (12) et un compresseur (8), et l'évaporateur (10), le compresseur (8), le condenseur (9) et l'appareil d'étranglement (12) qui sont raccordés de façon séquentielle pour former une trajectoire de circulation permettant à un fluide de le traverser en s'écoulant,
le condenseur (9) et l'évaporateur (10) étant disposés dans le conduit d'air sur une partie arrière du tambour extérieur (2), et
le conduit d'air comprenant : un premier conduit d'air vertical (17), un deuxième conduit d'air vertical (18) et un troisième conduit d'air vertical (19) qui sont disposés verticalement, sur une partie arrière du tambour extérieur (2) et sont raccordés de façon séquentielle les uns aux autres de manière bout à bout, et
un conduit d'air transversal inférieur (20) raccordé à une extrémité inférieure du premier conduit d'air vertical (17), et un conduit d'air transversal supérieur (22) raccordé à une extrémité supérieure du troisième conduit d'air vertical (19) ; et le conduit d'air transversal inférieur (20) étant en communication avec la partie inférieure du tambour extérieur (2), et le conduit d'air transversal supérieur (22) étant en communication avec une partie supérieure du tambour extérieur (2) de sorte à permettre au tambour extérieur (2) et au conduit d'air de former une trajectoire d'air de circulation en forme de 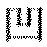 , **caractérisé en ce que**
une partie supérieure du premier conduit d'air vertical (17) et une partie supérieure du troisième conduit d'air vertical (19) sont toutes les deux plus hautes qu'une ouverture du tambour extérieur (2) et l'évaporateur (10) et le condenseur (9) étant disposés entre lesdites parties supérieures.

2. Lave-linge/sèche-linge combiné à pompe à chaleur du type pulsateur selon la revendication 1,
un treillis de filtrage (11) étant disposé dans le conduit d'air entre une première extrémité du conduit d'air et l'évaporateur (10), et un tuyau de vidange d'eau de condensation (16) étant raccordé à une section de raccordement entre le deuxième conduit d'air vertical (18) et le troisième conduit d'air vertical (19).

3. Lave-linge/sèche-linge combiné à pompe à chaleur du type pulsateur selon la revendication 2, l'évaporateur (10) étant disposé dans le deuxième conduit d'air vertical (18) et le condenseur (9) étant disposé dans le troisième conduit d'air vertical (19) lorsque la première extrémité du conduit d'air est une extrémité à laquelle le conduit d'air transversal inférieur (20) est raccordé à la partie inférieure du tambour extérieur (2).

4. Lave-linge/sèche-linge combiné à pompe à chaleur du type pulsateur selon la revendication 2, le condenseur (9) étant disposé dans le deuxième conduit d'air vertical (18) et l'évaporateur (10) étant disposé dans le troisième conduit d'air vertical (19) lorsque la première extrémité du conduit d'air est une extrémité à laquelle le conduit d'air transversal supérieur (22) est raccordé à la partie supérieure du tambour extérieur (2).

5. Lave-linge/sèche-linge combiné à pompe à chaleur du type pulsateur selon la revendication 2, l'évaporateur (10) et le condenseur (9) étant disposés de façon séquentielle dans le deuxième conduit d'air vertical (18) ou dans le troisième conduit d'air vertical (19), dans une direction d'écoulement de l'air.

6. Procédé de séchage pour le lave-linge/sèche-linge combiné à pompe à chaleur du type pulsateur selon l'une quelconque des revendications 1 à 5, comprenant :
introduire de l'air humide d'un tambour extérieur (2) dans un conduit d'air, condenser de l'humidité dans l'air humide par une action d'un système de pompe à chaleur, afin de former de l'eau condensée et de l'air sec à haute température, faire revenir par circulation l'air sec à haute température vers le tambour extérieur (2) et vidanger l'eau de condensation hors d'un lave-linge/sèche-linge combiné.

7. Procédé de séchage selon la revendication 6, un pulsateur pivotant dans un tambour intérieur du lave-linge/sèche-linge combiné, et faisant se retourner du linge dans le tambour intérieur par entraînement, pour permettre au linge d'entrer totalement en contact avec l'air sec à haute température pendant le séchage.

8. Procédé de séchage selon la revendication 6, une pression de fonctionnement du système de pompe à chaleur augmentant progressivement et une vitesse de rotation d'un compresseur diminuant après que la pression de fonctionnement dépasse une valeur de consigne, pendant le séchage.

9. Procédé de séchage selon la revendication 8, une soupape de vidange (15) étant ouverte et de l'air dans le conduit d'air de circulation qui est constitué par le conduit d'air et le tambour extérieur (2) échangeant de la chaleur avec l'air extérieur via un tuyau de vidange (6) de sorte à réduire une valeur de température de l'air dans le conduit d'air de circulation et à réduire une charge de fonctionnement du système de pompe à chaleur, si la pression de fonctionnement du système de pompe à chaleur est encore supérieure à la valeur de consigne lorsque la vitesse de rotation du compresseur du système de pompe à chaleur baisse jusqu'à une vitesse de fonctionnement minimum.
